# EUROPÄISCHE PATENTSCHRIFT

(11) **EP 2 601 232 B1**
(45) Veröffentlichungstag und Bekanntmachung des Hinweises auf die Patenterteilung: **11.06.2014**
(21) Anmeldenummer: 11743495.1
(22) Anmeldetag: 28.07.2011
(51) Int. Cl.: C08G 18/02, C08G 18/76, C08G 18/79, C08K 5/00, C08K 5/10, C08L 27/06, C09D 127/06

(54) **PHTHALATFREIE ISOCYANURATZUBEREITUNGEN**
PHTHALATE-FREE ISOCYANURATE FORMULATIONS
PRÉPARATIONS D'ISOCYANURATE DÉPOURVUES DE PHTHALATE

(30) Priorität: 02.08.2010 DE 102010033061
(43) Veröffentlichungstag der Anmeldung: 12.06.2013
(73) Patentinhaber: LANXESS Deutschland GmbH, 50569 Köln (DE); Bayer Intellectual Property GmbH, 40789 Monheim (DE)
(72) Erfinder: AUGUSTIN, Thomas, 51427 Bergisch Gladbach (DE); SANDERS, Josef, 51375 Leverkusen (DE)
(86) Internationale Anmeldenummer: PCT/EP2011/062976
(87) Internationale Veröffentlichungsnummer: WO 2012/016903

(56) Entgegenhaltungen:
- EP-A1- 0 051 239
- EP-A2- 0 150 803
- WO-A1-2005/070984
- DE-U1- 20 321 027

## Beschreibung

Die vorliegende Erfindung betrifft neue monomerenarme, niedrigviskose Zubereitungen aus isocyanatgruppenhaltigem Isocyanurat auschließlich auf Basis von 2,4-Diisocyanatotoluol und phthalatfreien Weichmachern, ihre Verwendung als Haftvermittler für Beschichtungsmittel auf Basis von weichgemachtem Polyvinylchlorid (PVC), sowie Beschichtungen und beschichtete Substrate.

Es ist bekannt, die Haftfähigkeit von weichgemachtem PVC auf Substraten dadurch zu verbessern, dass dem weichgemachten PVC ein isocyanatgruppenhaltiger Haftvermittler zugesetzt wird. Eine derart verbesserte Haftfähigkeit ist beispielsweise wichtig, wenn mit einem PVC-Belag versehene synthetische Textilstoffe hergestellt werden sollen. Als Haftvermittler werden bevorzugt isocyanatgruppenhaltige Isocyanurate eingesetzt, die sich durch Oligomerisierung, insbesondere Trimerisation, aus Diisocyanaten herstellen lassen. Hierfür werden normalerweise als Diisocyanate die kommerziell gut verfügbaren Mischungen der isomeren Diisocyanatotoluole (TDI), bestehend hauptsächlich aus 2,4-Diisocyanatotoluol (2,4-TDI) und 2,6-Diisocyanatotoluol (2,6-TDI), eingesetzt. Diese lassen sich auf einfache Weise nahezu vollständig in isocyanatgruppenhaltige Isocyanurate umsetzen. Der nahezu vollständige Umsatz ist aus Gründen der Arbeits- und Produktsicherheit erforderlich, weshalb man den Restgehalt an Diisocyanaten in der Haftvermittler-Zubereitung unter 1,0 Gew.-%, bevorzugt unter 0,5 Gew.-% hält. Weniger geeignet sind die ebenfalls gut verfügbaren Diisocyanatodiphenylmethane (MDI), die sich im Vergleich mit TDI schlechter trimerisieren lassen und so zu einem unerwünscht hohen Restgehalt an Diisocyanaten führen können. Darüber hinaus zeigen isocyanatgruppenhaltige Isocyanurate auf Basis von MDI eine schlechte Löslichkeit und neigen zur Kristallisation.

Isocyanatgruppenhaltige Isocyanurate lassen sich als Haftvermittler vor allem dann einfach handhaben, wenn sie in Form einer Lösung in einem Weichmacher angewendet werden. Die Herstellung der isocyanatgruppenhaltigen Isocyanurate aus TDI wird praktischer Weise ebenfalls in dem verwendeten Weichmacher durchgeführt. Derartige Haftvermittler und weichmacherhaltige Haftvermittler-Zubereitungen, ihre Herstellung und ihre Anwendung sind beispielsweise in DE 24 19 016 A1 (GB 1 455 701 A) beschrieben.

Weichmacher im Sinne der vorliegenden Erfindung sind Stoffe, die beim Mischen mit dem an sich harten und spröden PVC einen weichen, zähen Werkstoff ergeben, das so genannte weichgemachte PVC. Bekannte Weichmacher sind beispielsweise die Ester der Phthalsäure, Adipinsäure oder Benzoesäure. In weichgemachtem PVC können diese Weichmacher in großen Mengen enthalten sein, teilweise über 50 Gew.-% des weichgemachten PVC. Der Weichmacher kann sich unter Gebrauchsbedingungen oberflächlich absondern oder in benachbarte Materialien übergehen. Bei der Verwendung von weichgemachtem PVC besteht daher die Gefahr einer Kontamination von Mensch und Umwelt mit dem Weichmacher. Vor dem Hintergrund dieser Problematik wird in letzter Zeit vermehrt von den verwendeten Weichmachern gefordert, dass sie für den Menschen harmlos und nicht bioakkumulierend sind.

Nach der in der Europäischen Union gültigen Richtlinie 2005/84/EG dürfen beispielsweise die Weichmacher Di(2-ethylhexyl)phthalat, Dibutylphthalat und Benzylbutylphthalat nicht mehr in Spielzeug oder Babyartikeln verwendet werden und die Weichmacher Diisononylphthalat, Diisodecylphthalat und Di-n-octylphthalat nicht mehr in Spielzeug oder Babyartikeln, die von Kindern in den Mund genommen können, verwendet werden. Angesichts dieser Einschränkungen, die für manche Konsumenten als unübersichtlich und verunsichernd erscheinen können, gehen viele Hersteller dazu über, bei der Herstellung von weichgemachtem PVC generell auf alle phthalathaltigen Weichmacher zu verzichten. Daher besteht ein Bedarf an phthalatfreien Weichmachern, die hinsichtlich Verarbeitbarkeit und Nutzeigenschaften das Leistungsniveau von phthalathaltigen Weichmachern erreichen.

Als phthalatfreie Weichmacher werden im Zusammenhang mit der vorliegenden Erfindung solche Weichmacher bezeichnet, die keine Phthalsäuredialkylester enthalten, insbesondere Weichmacher, die weniger als 0,1 Gew.-% Phthalsäuredialkylester enthalten.

Der Verzicht auf phthalathaltige Weichmacher wird nun auch von weichmacherhaltigen Haftvermittler-Zubereitungen gefordert, insbesondere für sensible Anwendungen wie Spielzeug oder Babyartikel. Es besteht daher ein großer Bedarf an Haftvermittler-Zubereitungen, die keine Phthalate enthalten, aber dennoch die guten Haftungseigenschaften phthalathaltiger Haftvermittler-Zubereitungen aus dem Stand der Technik aufweisen. Weiterhin wird gefordert, dass die Zubereitungen klar und frei von Feststoffen sind, keine flüchtigen Lösungsmittel enthalten und für eine gute Verarbeitbarkeit eine Viskosität bei 23°C von kleiner als 30.000 mPas, bevorzugt kleiner 20.000 mPas aufweisen. Der Restgehalt an Diisocyanaten soll weniger als 1,0 Gew.-%, bevorzugt weniger als 0,5 Gew.-% betragen. In neuerer Zeit werden jedoch auch solche Restgehalte für sensible Anwendungen als kritisch angesehen. Eine Kombination aller dieser Produkteigenschaften ist im Stand der Technik bisher nicht beschrieben, so auch nicht in DE 10 2007 034 977 A1.

So sind die in WO 2005 70984 A1 beschriebenen Haftvermittler-Zubereitungen auf Basis von Diisononylphthalat für sensible Anwendungen nicht mehr geeignet. In DE 25 51 634 A1 und EP 1 378 529 A1 wird behauptet, als Haftvermittler geeignete isocyanatgruppenhaltige Isocyanurate auf Basis von TDI lassen sich in beliebigen Lösungsmitteln, darunter auch in phthalatfreien Weichmachern, herstellen. Die unten angeführten Vergleichsbeispiele zeigen jedoch, dass keineswegs alle phthalatfreien Weichmacher zu Haftvermittler-Zubereitungen führen, die die beschriebenen Anforderungen erfüllen. Dies gilt auch für die in DE 10 2007 034 977 beschriebenen Weichmacher auf Basis von Alkylsulfonsäureester des Phenols (ASE), die unter dem Handelsnamen Mesamoll^{®} vertrieben werden. DE 30 41 732 A1 beschreibt als Haftvermittler geeignete Lösungen von isocyanatgruppenhaltigen Isocyanuraten, die allerdings aus MDI hergestellt werden. Diese Lösungen sind aus den oben genannten Gründen ungeeignet.

Das Dokument EP 0 150 803 A2 offenbart Haftungsvermittelnde Zusätze enthaltende PVC-Plastisolgemische für Beschichtungszwecke, auf Basis von A) PVC-Plastisolen und B) Polyisocyanaten und Weichmachern und/oder leicht verzweigten, höhermolekularen, PVC-Plastisol-verträglichen Polyhydroxylverbindungen mit Schmelzpunkten unter 60°C. Das Beispiel 1 von EP 0 150 803 A2 beschreibt die Herstellung dieser Zubereitung: 56 g eines monomerfreien, trimerisierten, 2,4-Diisocyanatotoluols (Polyisocyanurat mit einem NCO-Gehalt von 15,5 %) werden in Form eines feingemahlenen Pulvers in 100 g Dioctylphthalat als Weichmacher suspendiert.

Aufgabe der vorliegenden Erfindung war es daher, als Haftvermittler geeignete Zubereitungen von isocyanatgruppenhaltigen Isocyanuraten zur Verfügung zu stellen, die zwar phthalatfreie Weichmacher enthalten, aber in ihren mechanischen Eigenschaften, wie z. B. Haftfestigkeiten, das Niveau der phthalathaltigen Haftvermittler-Zubereitungen aus WO 2005 70984 A1 erreichen und gleichzeitig einen möglichst niedrigen TDI-Restgehalt bei verarbeitbarer Viskosität aufweisen.

Lösung der Aufgabe und somit Gegenstand der vorliegenden Erfindung sind Zubereitungen, dadurch gekennzeichnet, dass diese
A) 15 bis 50 Gew.-% isocyanatgruppenhaltiges Isocyanurat
B) 84,99 bis 49,99 Gew.-% n- oder iso- Alkylmonobenzoate und
C) einen 2,4-TDI Restgehalt im Bereich von 0,01 bis 0,099 Gew.-% enthalten und eine Viskosität im Bereich von 5.000 -18.000 mPas/23°C (Endwerte eingeschlossen) aufweisen, mit der Maßgabe, dass
   i) das isocyanatgruppenhaltige Isocyanurat ausschließlich durch Trimerisation von 2,4-Diisocyanatotoluol erzeugt wird und
   ii) die Summe aller Gewichtsprozente 100% ergibt.

In einer bevorzugten Ausführungsform können auch weitere Stoffe enthalten sein, besonders bevorzugt Katalysatoren, Katalysatorengifte.

In einer bevorzugten Ausführungsform der Erfindung werden als n- oder iso-Alkylmonobenzoate n- oder iso-Nonylbenzoate eingesetzt.

In einer bevorzugten Ausführungsform der vorliegenden Erfindung weisen die erfindungsgemäßen Zubereitungen eine Viskosität im Bereich von 7.000 bis-16.000 mPas/23°C (Endwerte eingeschlossen) auf, besonders bevorzugt im Bereich von 8.000 bis 14.000 mPas/23°C (Endwerte eingeschlossen).

In einer bevorzugten Ausführungsform der vorliegenden Erfindung weisen die erfindungsgemäßen Zubereitungen einen 2,4-TDI-Restgehalt von 0,01 bis 0,099 Gew.-%, besonders bevorzugt von 0,01 bis 0,05 Gew.-% auf (Endwerte jeweils eingeschlossen).

Zur Herstellung der Komponente A) wird ausschließlich 2,4-TDI verwendet. In einer bevorzugten Ausführungsform wird 2,4-TDI mit einem Reinheitsgrad ≥ 99,5 Gew.-% eingesetzt. In einer besonders bevorzugten Ausführungsform weist das einzusetzende 2,4-TDI zusätzlich eine Viskosität im Bereich von 2,9 bis 3,1 mPa•s, insbesondere von 3 mPa•s (gemessen nach DIN 53015) auf. In einer ganz besonders bevorzugten Ausführungsform weist das einzusetzende 2,4-TDI zusätzlich noch eine Dichte von 1,20-1,25 g/ml, insbesondere von 1,22 g/ml (gemessen nach DIN 51757) auf. Erfindungsgemäß zu verwendendes 2,4-TDI ist beispielsweise das kommerziell von der Bayer Material Science AG erhältliche Produkt Desmodur® T100.

Zur Herstellung der Komponente A) kommt wenigstens eine Mannich-Base als Katalysator zur Initiierung und Beschleunigung der Trimerisationsreaktion des 2,4-TDI in Betracht, die auch bei höheren Temperaturen zu einem selektiven Einbau von 2,4-TDI führen. Solche Katalysatorsysteme weisen an Aromaten gebundene N,N-Dialkylaminomethylgruppen und phenolische OH-Gruppen auf (Alkyl: C1-C3-Alkylkette und/oder Alkylenkette mit 1 bis 18 Kohlenstoffatomen, die gegebenenfalls durch Sauerstoff oder Schwefel getrennt sind).

Diese Gruppen können auf mehrere Moleküle verteilt, oder an einem oder mehreren Aromatenringen positioniert sein. Vorzugsweise werden Verbindungen als Katalysatorsysteme eingesetzt, die sowohl Hydroxyl- als auch Aminomethylgruppen in einem Molekül enthalten.

Besonders bevorzugt werden Systeme eingesetzt, deren C1-C3-Dialkylaminomethylgruppen in ortho-Stellung zu aromatischen Hydroxylgruppen positioniert sind.

Die Synthese von als Katalysatoren geeigneten Mannich-Basen ist beispielsweise in DE 25 51 634 A1 und WO 2005 70984 A1 beschrieben. Bevorzugt einzusetzende Mannich-Basen sind solche auf Basis von Phenol, p-Isononylphenol oder Bisphenol A, die durch Umsetzung mit Dimethylamin und Formaldehyd z.B. nach der DE-A 2 452 531 oder Synth.Commun. (1986), 16, 1401-9 erhalten werden. Insbesondere bevorzugt sind Mannich-Basen auf Basis Phenol oder Bisphenol A.

Die als Mannich-Basen einzusetzenden Katalysatoren werden als Reinsubstanz oder gelöst, bevorzugt in mehreren kleinen Portionen oder kontinuierlich eingesetzt.

Die Herstellung der Komponente A) geschieht durch Trimerisation des 2,4-Diisocyanatotoluols (2,4-TDI) nach bekannten Verfahren, wie sie beispielsweise in WO 2005 70984 A1 beschrieben sind.

Die Trimerisation wird in Gegenwart der Weichmacherkomponente B) durchgeführt. Die Trimerisationsreaktion erfolgt im Temperaturbereich von 40 bis 140°C, vorzugsweise 40 bis 80°C. Wenn der Gehalt an freiem 2,4-TDI in der Reaktionsmischung unter 0,1 Gew.-% liegt, wird die Trimerisation durch thermische Zersetzung des Katalysators oder aber bevorzugt durch Zugabe eines Katalysatorengifts abgebrochen. Das Produkt enthält dann 3 bis 7 Gew.-% , vorzugsweise 4,5 bis 6 Gew.-% Isocyanatgruppen.

Bevorzugt wird die Trimerisationsreaktion am Ende durch Zugabe wenigstens eines Katalysatorgiftes abgestoppt. Bevorzugt werden dafür Katalysatorgifte aus der Reihe der Protonensäuren, Säurechloride oder methylierenden Verbindungen eingesetzt. Besonders bevorzugt werden Alkylphosphate, insbesondere Dibutylphosphat, oder Toluolsulfonsäuremethylester eingesetzt. Die erfindungsgemäßen Zubereitungen enthalten das oder die Katalysatorgift(e) bevorzugt zu 0,02 bis 4 Gew.-%, besonders bevorzugt zu 0,1 bis 2 Gew.-%, ganz besonders bevorzugt zu 0,2 bis 1 Gew.-%.

Das als Weichmacher in der erfindungsgemäßen Zubereitung einzusetzende n- oder iso-Alkylmonobenzoat der Komponente B) enthält bevorzugt < 0,1 Gew.-% Phthalsäuredialkylester und ≥ 50 Gew.-% n- oder iso-Alkylmonobenzoat. Die n- oder iso Alkylmonobenzoate werden durch die Veresterung von Benzoesäure mit monofunktionalen linearen oder verzweigten Alkylalkoholen, bevorzugt C7-bis C10-Alkoholen hergestellt werden.

In einer besonders bevorzugten Ausführungsform der Erfindung werden als Komponente B) mehr als > 90 Gew.-% n- oder iso-Nonylbenzoat eingesetzt. Die zur Synthese der Verbindungen der Komponente B) erforderlichen C9-Alkohole sind bevorzugt Nonanole der Reihe n-Nonanol, Methylisopropyl-pentanol, Methyl-propyl-pentanol, Trimethylhexanol, Ethyl-methyl-hexanol, Propylhexanol, Dimethylheptanol, Ethylheptanol, Methyloctanol.

Besonders bevorzugt ist als Komponente B) eine Mischung von n- und iso-Nonanolbenzoaten, dadurch gekennzeichnet, dass nur ein geringer Anteil von 3,5,5,- Trimethylhexanol-Benzoat enthalten ist.

Ganz besonders bevorzugt ist als Komponente B) eine Mischung von n- und iso-Nonanolbenzoaten, dadurch gekennzeichnet, dass ein Anteil von < 10 Mol % 3,5,5-Trimethylhexanol-benzoat enthalten ist.

Im Gegensatz zur EP 1378 529 A1 wird die erfindungsgemäße Umsetzung des 2,4-TDI zum isocyanatgruppenhaltigen Isocyanurat in Abwesenheit eines Lösungsmittels, also lösungsmittelfrei, durchgeführt.

Lösungsmittel im Sinne der vorliegenden Erfindung sind flüchtige organische Verbindungen, sogenannte VOCs (volatile organic compounds) oder VVOCs (very volatile organic compounds). Zur Definition der VOCs siehe http://de.wikipedia.org/wiki/F1%C3%BCchtige_organische-Verbindungen.

Im Sinne der vorliegenden Erfindung sind Lösungsmittel organische Verbindungen, die gemäß Richtlinie 1999/13/EG vom 11. März 1999 bei 293,15 Kelvin einen Dampfdruck von 0,01 Kilopascal oder mehr haben und unter den jeweiligen Verwendungsbedingungen eine entsprechende Flüchtigkeit aufweisen oder die gemäß Richtlinie 2004/42/EG vom 24. April 2004 einen Anfangssiedepunkt von höchstens 250°C bei einem Standarddruck von 101,3 kPa aufweisen.

Lösungsmittel im Sinne der vorliegenden Erfindung sind insbesondere in der Polyurethanchemie gebräuchliche Verdünnungsmittel und Lösemittel wie beispielsweise Toluol, Xylol, Cyclohexan, Chlorbenzol, Butylacetat, Ethylacetat, Ethylglykolacetat, Pentylacetat, Hexylacetat, Methoxypropylacetat, Tetrahydrofuran, Dioxan, Aceton, N-Methylpyrrolidon, Methylethylketon, Testbenzin, höher substituierte Aromaten, wie beispielsweise unter der Bezeichnung Solvent Naphtha^{®}, Solvesso^{®}, Shellsol^{®}, Isopar^{®}, Nappar^{®} und Diasol^{®} im Handel, Scherbenzol, Tetralin, Dekalin und Alkane mit mehr als 6 Kohlenstoffatomen, sowie Gemische derartiger Lösungsmittel.

In einer bevorzugten Ausführungsform enthalten erfindungsgemäße Zubereitungen aufgrund des Herstellverfahrens zusätzlich zu A), B) und C) noch 0,01 bis 2 Gew.-%, besonders bevorzugt 0,05 bis 1 Gew.-% Mannich-Base(n) oder deren Abbauprodukte und/oder 0,01 bis 2 Gew.-% Katalysatorgift.

Zur Klarstellung sei angemerkt, dass vom Rahmen dieser Erfindung alle in der vorliegenden Offenbarung aufgeführten, allgemeinen oder in Vorzugsbereichen genannten Definitionen und Parameter in beliebigen Kombinationen umfasst sind.

Die erfindungsgemäßen Zubereitungen sind klare, leicht gelbliche bis gelbliche Flüssigkeiten mit überraschender Lagerstabilität, die auch nach mehrwöchiger Lagerung weder zur Kristallisation noch zur Bildung von Ausfällungen oder Phasentrennung neigen. Außerdem zeichnen sie sich auch nach Lagerung durch einen äußerst geringen Gehalt an freiem 2,4-TDI aus, was wegen des relativ niedrigen Siedepunktes dieses toxikologisch bedenklichen Diisocyanats ein besonderer Vorteil der erfindungsgemäßen Zubereitungen ist.

Da als Haftvermittler geeignete Zubereitungen isocyanatgruppenhaltiger Isocyanurate nach dem Stand der Technik am besten durch Trimerisation von Diisocyanaten im Weichmacher hergestellt werden und der Verlauf der Trimerisationsreaktion nicht nur vom Katalysator, sondern auch beispielsweise durch den eingesetzten Weichmacher beeinflusst wird, war es nicht zu erwarten, dass gerade die erfindungs-wesentliche Kombination von Weichmacher, Katalysator und ausschließlichem Einsatz von 2,4-TDI Haftvermittler-Zubereitungen mit den geforderten Eigenschaften liefern würde. Tatsächlich zeigen die unten angeführten Vergleichsbeispiele 1 bis 8 dass die dieser Erfindung zugrunde liegende Aufgabe nicht mit beliebigen phthalatfreien Weichmachern und 2,6-TDI enthaltenden TDI-Isomerengemischen zu lösen ist.

Die vorliegende Erfindung betrifft aber auch ein Verfahren zur Herstellung der erfindungsgemäßen Zubereitungen, dadurch gekennzeichnet, dass man die Trimerisation des ausschließlich einzusetzenden 2,4-TDI zur Komponente A) in Gegenwart der Weichmacherkomponente B) lösungsmittelfrei und in Anwesenheit wenigstens einer als Katalysator fungierenden Mannich-Base im Temperaturbereich von 40 bis 140°C, vorzugsweise 40 bis 80°C durchführt und sobald der Gehalt an freiem 2,4-TDI in der Reaktionsmischung unter 0,1Gew.-% liegt, die Trimerisation unter vollständiger oder teilweiser Deaktivierung des Katalysators durch thermische Zersetzung des Katalysators oder durch Zugabe wenigstens eines Katalysatorengifts abgebrochen wird.

Bevorzugt wird beim erfindungsgemäßen Verfahren die als Katalysator einzusetzende Mannich-Base zu 0,01 bis 2,0 Gew.-% eingesetzt.

Bevorzugt werden beim erfindungsgemäßen Verfahren als Katalysatorgift solche aus der Reihe der Protonensäuren, Säurechloride oder methylierenden Verbindungen, besonders bevorzugt Dibutylphosphat oder Toluolsulfonsäuremethylester, eingesetzt.

Durch das erfindungsgemäße Verfahren erhält man bevorzugt erfindungsgemäße Zubereitungen, die dann 3 bis 7 Gew.-%, vorzugsweise 4,5 bis 6 Gew.-%, Isocyanatgruppen enthalten.

In einer bevorzugten Ausführungsform enthalten die erfindungsgemäßen Zubereitungen in den n-oder iso Alkylmonobenzoaten > 90 Gew.-% n- oder iso-Nonylbenzoate.

In einer besonders bevorzugten Ausführungsform enthalten die erfindungsgemäßen Zubereitungen 20 bis 35 Gew.-% isocyanatgruppenhaltiges Isocyanurat und 79,99 bis 64,99 Gew.-% n- oder iso-Alkylmonobenzoate, bevorzugt n- oder iso-Nonylbenzoate.

Die erfindungsgemäßen Zubereitungen eignen sich als Haftvermittler für weichgemachtes PVC und insbesondere als haftvermittelnde Zusätze für PVC-Plastisole. Besonders vorteilhaft werden die erfindungsgemäßen Zubereitungen als Haftvermittler zwischen Substraten aus Chemiefasern mit gegenüber Isocyanat-gruppen reaktionsfähigen Gruppen, wie z. B. Polyamid- oder Polyesterfasern, und PVC-Plastisolen bzw. Weich-PVC-Schmelzen verwendet. Selbstverständlich kann mit den erfindungsgemäßen Lösungen auch die Haftung von weichgemachtem PVC bzw. PVC-Plastisolen an flächigen Substraten, wie beispielsweise an Folien, verbessert werden.

Daher ist ein weiterer Gegenstand der vorliegenden Erfindung die Verwendung der erfindungsgemäßen Zubereitungen als Haftvermittler für Beschichtungsmittel auf Basis von weichgemachtem PVC.

Bei der erfindungsgemäßen Verwendung der erfindungsgemäßen Zubereitungen kann beispielsweise so vorgegangen werden, dass die erfindungsgemäßen Zubereitungen auf die zu beschichtenden Substrate gedruckt, gerakelt, gerastert oder gesprüht oder durch Tauchen aufgebracht werden. Je nach herzustellendem Artikel werden auf die so vorbehandelten Substratoberflächen eine oder mehrere haftvermittlerfreie PVC-Schichten, z. B. als Plastisole oder durch Extrusions- oder Schmelzwalzenbeschichtung oder durch Laminierung, aufgebracht. Besonders bevorzugt können die erfindungsgemäßen Zubereitungen auch einem PVC-Plastisol vor dessen Applikation zugesetzt werden.

Die erfindungsgemäßen Zubereitungen werden normalerweise in solchen Mengen eingesetzt, dass, bezogen auf die Beschichtungsmasse, 0,5 bis 200 Gew.-%, vorzugsweise 1 bis 30 Gew.-% isocyanatgruppenhaltige Isocyanurate vorliegen. Die erfindungsgemäßen Lösungen können jedoch auch in beliebigen anderen, dem jeweiligen Anwendungsgebiet angepassten Mengen eingesetzt werden.

Die Herstellung der fertigen Schichten, also die Reaktion der Isocyanatgruppen des Haftvermittlers mit dem Substrat und die Gelierung der PVC-Schicht, erfolgt unabhängig von der Art des Auftrags in üblicher Weise bei höheren Temperaturen, wobei je nach Zusammensetzung der PVC-Schichten Temperaturen zwischen 110 und 210°C angewandt werden.

Ein weiterer Gegenstand der vorliegenden Erfindung sind Beschichtungen und beschichtete Substrate für Textilien oder Gewebe, die unter Verwendung der oben beschriebenen Haftvermittler-Zubereitungen erhältlich sind. Die erfindungsgemäßen Zubereitungen eignen sich als Haftvermittler für Beschichtungen auf Basis von weichgemachtem Polyvinylchlorid (PVC), insbesondere zur Herstellung von Planen, Billboards, Traglufthallen und anderen textilen Bauten, flexiblen Behältern, Zeltdächem, Markisen, Schutzbekleidungen, Förderbändern, Flockteppichen oder Schaumkunstleder. Besonders gut geeignet sind die erfindungsgemäßen Zubereitungen als haftvermittelnde Zusatzmittel bei der Beschichtung von Substraten mit gegenüber Isocyanatgruppen reaktionsfähigen Gruppen, insbesondere bei der Beschichtung von Garnen, Matten und Geweben aus Polyester- oder Polyamidfasern.

Die vorliegende Erfindung betrifft deshalb auch Beschichtungsmittel, bevorzugt auf Basis von Polyvinylchlorid, dadurch gekennzeichnet, dass eine erfindungsgemäße Zubereitung eingesetzt wird.

Anhand der nachfolgenden Beispiele wird die Erfindung näher erläutert, ohne dass dadurch eine Einschränkung der Erfindung bewirkt werden soll.

Sofern nicht anders vermerkt, beziehen sich alle Teile und Prozentangaben auf das Gewicht.

Als Kenndaten der Produkte wurden der Festkörpergehalt (Dickschichtmethode: Deckel, 1 g Probe, 1 h 125°C Konvektionsofen, Grundlage DIN EN ISO 3251), die Viskosität bei 23°C (Rotationsviskosimeter VT550 der Fa. Haake GmbH, Karlsruhe) sowie der Gehalt an freiem TDI (Gaschromatographie, Hewlett Packard 5890 nach DIN ISO 55956) bestimmt. Die Bestimmung des Isocyanatgehaltes erfolgte nach EN ISO 11909.

### Ausgangsstoffe

Desmodur® T80: Isomerengemisch aus 2,4-Diisocyanatotoluol und 2,6-Diisocyanatotoluol (80:20) Bayer MaterialScience AG

Desmodur® T100: 2,4-Diisocyanatotoluol, Bayer Material Science AG.

Vestinol® 9 DINP: Diisononylphthalat, Oxeno GmbH.

Vestinol® INB, Isononylbenzoat, Evonik.

Benzoflex® 2088: Mischung aus Diethylenglycoldibenzoat, Triethylenglycoldibenzoat und Dipropylenglycoldibenzoat, Velsicol Chemical Corp

Unimoll® AGF, Acetyliertes Glycerinacetat, Lanxess Deutschland GmbH

Mesamoll® II: Alkansulfonsäurephenolester mit ≤ 0,25 Gew.-% flüchtigen paraffinischen Verbindungen, Lanxess Deutschland GmbH.

Katalysator-Herstellung: (analog nach DE 24 52 532 A1): 94 Gewichtsteile Phenol wurden mit 692 Gewichtsteilen einer 25%igen wässrigen Dimethylamin-Lösung und 408 Gewichtsteilen einer 40%-igen wässrigen Formaldehyd-Lösung für zwei Stunden auf 80°C erhitzt. Nach Erkalten wurde die organische Phase abgetrennt und bei 90°C und 15 mbar eingedampft. Der Rückstand wurde in Xyol gelöst und auf eine Mannich-Basen-Konzentration von 80% eingestellt. Die Mengenangaben in den folgenden Beispielen beziehen sich auf diese Katalysatorlösung.

### Vergleichsbeispiel 1 (nicht erfindungsgemäß)

180 Gewichtsteile Desmodur® T80 wurden bei 50°C in 504 Gewichtsteilen Vestinol® 9 DINP mit 2,9 Gewichtsteilen der Katalysatorlösung trimerisiert. Nach 84 Stunden wurde die Reaktion durch Zugabe von 4,7 Gewichtsteilen para-Toluolsulfonsäuremethylester unterbrochen und bei 60 bis 70°C drei Stunden nachgerührt. Es wurde eine klare Lösung mit einem Isocyanatgehalt von 4,7 Gew.-%, einer Viskosität bei 23°C von 5.700 mPas und einem Gehalt an freiem TDI von 0,16 Gew.-% erhalten.

### Vergleichsbeispiel 2 (nicht erfindungsgemäß)

180 Gewichtsteile Desmodur® T80 wurden bei 55°C in 378 Gewichtsteilen Vestinol® 9 DINP mit 1,6 Gewichtsteilen der Katalysatorlösung trimerisiert. Nach 72 Stunden wurde die Reaktion durch Zugabe von 2,6 Gewichtsteilen para-Toluolsulfonsäuremethylester unterbrochen und bei 60 bis 70°C drei Stunden nachgerührt. Es wurde eine klare Lösung mit einem Isocyanatgehalt von 5,53 Gew.-%, einer Viskosität bei 23°C von 41.400 mPas und einem Gehalt an freiem TDI von 0,14 Gew.-% erhalten.

### Vergleichsbeispiel 3 (nicht erfindungsgemäß)

180 Gewichtsteile Desmodur® T80 wurden bei 50°C in 415 Gewichtsteilen in Benzoflex® 2088 mit 0,7 Gewichtsteilen der Katalysatorlösung trimerisiert. Nach 84 Stunden wurde die Reaktion durch Zugabe von 1,7 Gewichtsteilen para-Toluolsulfonsäuremethylester unterbrochen und bei 60 bis 70°C drei Stunden nachgerührt. Es wurde eine klare Lösung mit einem Isocyanatgehalt von 4,8 Gew.-%, einer Viskosität bei 23°C von > 200.000 mPas und einem Gehalt an freiem TDI von 1.09 Gew.-% erhalten.

### Vereleichsbeispiel 4 (nicht erfindungsgemäß)

180 Gewichtsteile Desmodur® T80 wurden bei 55°C in 504 Gewichtsteilen Mesamoll® II mit 2,9 Gewichtsteilen der Katalysatorlösung trimerisiert. Nach 72 Stunden wurde die Reaktion durch Zugabe von 4,7 Gewichtsteilen para-Toluolsulfonsäuremethylester unterbrochen und bei 60 bis 70°C drei Stunden nachgerührt. Es wurde eine klare Lösung mit einem Isocyanatgehalt von 4,8 Gew.-%, einer Viskosität bei 23°C von 11.600 mPas und einem Gehalt an freiem TDI von 0,25 Gew.-% erhalten.

### Vergleichsbeispiel 5 (nicht erfindungsgemäß)

180 Gewichtsteile Desmodur® T80 wurden bei 55°C in 378 Gewichtsteilen Mesamoll® II mit 1,5 Gewichtsteilen der Katalysatorlösung trimerisiert. Nach 72 Stunden wurde die Reaktion durch Zugabe von 2,6 Gewichtsteilen para-Toluolsulfonsäuremethylester unterbrochen und bei 60 bis 70°C drei Stunden nachgerührt. Es wurde eine klare Lösung mit einem Isocyanatgehalt von 5,31 Gew.-%, einer Viskosität bei 23°C von > 300.000 mPas und einem Gehalt an freiem TDI von 0,15 Gew.-% erhalten.

### Vergleichsbeispiel 6 (nicht erfindungsgemäß)

180 Gewichtsteile Desmodur® T80 wurden bei 55°C in 378 Gewichtsteilen Unimoll^{®} AGF mit 1,5 Gewichtsteilen der Katalysatorlösung trimerisiert. Nach 72 Stunden wurde die Reaktion durch Zugabe von 2,6 Gewichtsteilen para-Toluolsulfonsäuremethylester unterbrochen und bei 60 bis 70°C drei Stunden nachgerührt. Es wurde eine klare Lösung mit einem Isocyanatgehalt von 4,9 Gew.-%, einer Viskosität bei 23°C von 35.400 mPas und einem Gehalt an freiem TDI von 0,42 Gew.-% erhalten

### Vereleichsbeispiel 7 (nicht erfindungsgemäß),

180 Gewichtsteile Desmodur® T80 wurden bei 55°C in 378 Gewichtsteilen Vestinol® INB mit 1,5 Gewichtsteilen der Katalysatorlösung trimerisiert. Nach 54 Stunden wurde die Reaktion durch Zugabe von 3,4 Gewichtsteilen Dibutylphosphat unterbrochen und bei 60 bis 70°C 1 Stunde nachgerührt. Es wurde eine klare Lösung mit einem Isocyanatgehalt von 5,44 Gew.-%, einer Viskosität bei 23°C von 9.900 mPas und einem Gehalt an freiem TDI von 0,4 Gew.-% erhalten.

### Vergleichsbeispiel 8 (nicht erfindungsgemäß)

180 Gewichtsteile Desmodur® T80 wurden bei 55°C in 378 Gewichtsteilen Vestinol® INB mit 2,0 Gewichtsteilen der Katalysatorlösung trimerisiert. Nach 100 Stunden wurde die Reaktion durch Zugabe von 3,4 Gewichtsteilen Dibutylphosphat unterbrochen und bei 60 bis 70°C 1 Stunde nachgerührt. Es wurde eine klare Lösung mit einem Isocyanatgehalt von 5,08 Gew.-%, einer Viskosität bei 23°C von 160.000 mPas und einem Gehalt an freiem TDI von 0,09 Gew.-% erhalten.

Vergleichsbeispiel 1 entspricht Beispiel 2 aus EP 1 711 546 A1 und dient dazu, die Eigenschaften der erfindungsgemäßen Haftvermittler-Zubereitungen mit dem Stand der Technik vergleichen zu können. Vergleichsbeispiel 2 zeigt, dass die Erhöhung des TDI-Trimergehaltes auf ca. 32% bei Verwendung eines nicht erfindungsgemäßen Weichmachers zu einer prohibitiven Viskositätserhöhung führt. Wie die nicht erfindungsgemäßen Vergleichsbeispiele 1 bis 6 weiterhin zeigen, hat die Auswahl des Weichmachers einen entscheidenden Einfluss auf das Ergebnis der Trimerisation. So kann die gewünschte Eigenschaftskombination durch Verwendung der im Stand der Technik beschriebenen phthalatfreien Weichmacher nicht bzw. nur erreicht werden, wenn die TDI-Trimer-Konzentration ca. 27 Gew.-% nicht überschreitet. Die Haftvermittler können entweder aufgrund ihrer hohen Viskosität nicht mehr verarbeitet werden bzw. ergeben wegen ihrer zu geringen TDI-Trimer-Konzentration zu geringe Haftfestigkeiten. (s.u.). Vergleichbeispiel 7 ergibt zwar die gewünschte Haftfestigkeit und Viskosität, weist jedoch einen zu hohen Gehalt an freiem TDI auf. Kein Produkt gemäß Vergleichsbeispiele1-7 weist den gewünschten Gehalt an freiem TDI von <0,1 Gew.% auf. In Beispiel 8 wird die Trimerisation soweit getrieben, dass der TDI -Gehalt < 0,1Gew.-% liegt. Dabei steigt jedoch die Viskosität bei 23°C auf > 100.000 mPas an, so dass das Produkt nicht mehr als Haftvermittler verarbeitet werden kann.

### Beispiel 1 (erfindungsgemäß)

180 Teile Desmodur® T100 wurden bei 55°C in 378 Teilen Vestinol® INB mit 1,5 Teilen der Katalysatorlösung trimerisiert. Nach 48 Stunden wurde die Reaktion durch Zugabe von 3,4 Teilen Dibutylphosphat unterbrochen und bei 60 bis 70°C 1 Stunde nachgerührt. Es wurde eine klare Lösung mit einem Isocyanatgehalt von 5,24%, einer Viskosität bei 23°C von 8.200 mPas und einem Gehalt an freiem TDI von <0,03 Gew.-% erhalten.

Erst durch Einsatz von Desmodur® T100 wird die gewünschte Kombination von niedriger Viskosität und Gehalt an freiem TDI von <0,1 Gew.-% erreicht.

### Anwendungstechnische Prüfung und Prüfergebnisse:

In einem praxisnahen Prüfsystem wurde Polyestergewebe mit einer PVC-Plastisol/Haftvermittlerbeschichtung versehen. Die Haftfestigkeit dieser Beschichtung wurde anschließend an einem normierten Teststreifen bestimmt. Dazu wurden mit einem Rakel Polyestergewebe jeweils mit einem haftvermittlerhaltigen Haftstrich und einem haftvermittlerfreien Deckstrich mit ansonsten gleicher Zusammensetzung versehen. Diese Beschichtungen wurden in einem Thermoofen geliert und der weiteren Prüfung zugeführt. Bei der Prüfung der Haftfestigkeit wurden zwei Teststreifen (PVC Seite auf PVC Seite) übereinander gelegt, bei niedrigem Druck verpresst und mittels einer Zugmaschine geprüft.

### Prüfeinrichtungen:

Waage: Genauigkeit min. 0,1 g
Rührer: hochtouriger Stabrührer
Mathisofen Labcoater der Firma Mathis AG Zürich
Zugmaschine Ametec LR5 K plus
Polyester-Gewebe: Polyester 1100 dtex L 9/9 Z 60 Standardgewebe
Für die Prüfung wurden ca. 40 × 25 cm große Gewebeproben verwendet.

### Zusammensetzung des PVC-Plastisols:

70 T Pasten PVC; Vestolit® B 7021 Ultra; Vestolit GmbH; Marl
30 T Pasten PVC Vestolit ® E 7031 ; Vestolit GmbH; Marl
33 T ASEP Weichmacher Mesamoll ®; Lanxess Deutschland GmbH
33 T DINP Weichmacher Vestinol ® 9; Evonik Oxeno GmbH, Marl
10 T Kreide Durcal ® 5; Omya GmbH; Köln
2,5 T Stabilisator Mark ® BZ 513; Crompton Vinyl Additives GmbH; Lampertheim
1,5 T Titandioxid Kronos ® 2220; Kronos Titan GmbH; Leverkusen

### Prüfkörper:

| | | |
|---|---|---|
| 1. Haftstrich | ca. 120 g/m² | 140°C / 2 min |
| 2. Deckstrich | ca. 120 g/m² | 140°C / 2 min |

Die Prüfkörper wurden bei 180°C für 2 min verpresst und verschweißt.
Dimension: 5 cm Breite x 25 cm Länge ) in Fadenschussrichtung

Prüfung mit Zugmaschine Ametec LR5 K plus

Zur Herstellung des PVC-Plastisols wurden die oben unter "Zusammensetzung des PVC-Plastisols" aufgeführten Ausgangsstoffe in einem Mischer der Firma Drais durch Rühren für 2,5 Stunden bei höchster Drehzahl, unter Wasserkühlung und im Vakuum vermischt.

### Haftstrich:

Anhand dieser Proben wurden dann die Haftfestigkeiten mittels einer Zugmaschine, Typ Ametec LR 5 K plus , bestimmt. Die erhaltenen Haftfestigkeitswerte geben die Kraft in Newton an, die notwendig ist, um 10 cm der Beschichtung vom Trägergewebe abzulösen (Schältest, tabellarisch dargestellt als Wirksamkeit). Die in der Tabelle angegebenen Werte wurden durch Mittelung von mindestens drei Einzelmessungen erhalten.

Wie das Messergebnis zu Beispiel 1 zeigt, liefert die Verwendung der erfindungsgemäßen phthalatfreien Haftvermittler-Zubereitungen höhere Haftfestigkeitswerte, als sie mit der phthalathaltigen Haftvermittler-Zubereitung aus dem Stand der Technik (Vergleichsbeispiel 1 und 2) erreicht werden. Die Haftvermittler aus den Vergleichsbeispielen 3 und 5 eigneten sich nicht zur Weiterverarbeitung, da diese zu hochviskos waren, um homogene Beschichtungen erhalten zu können. Vergleichsbeispiele 4 und 6 zeigen zu geringe Haftfestigkeitswerte. Vergleichsbeispie17 zeigt akzeptable Wirksamkeit und Viskosität, jedoch ist der Restgehalt an freiem 2,4-TDI zu hoch. Vergleichsbeispiel 8 zeigt einen 2,4-TDI-Restgehalt von unter 0,1 Gew.-%, kann jedoch aufgrund seiner viel zu hohen Viskosität nicht bezüglich seiner Wirksamkeit geprüft werden. Bei den Vergleichsbeispielen 1 bis 7 liegt der 2,4-TDI-Restgehalt immer über 0,1 Gew.-%.

### Prüfergebnisse:

| **Beispiel** | | **Viskosität** | **Wirksamkeit** |
|---|---|---|---|
| Vergleichsbeispiel 1 | nicht erfindungsgemäß | 5.700 mPas | 153 |
| Vergleichsbeispiel 2 | nicht erfindungsgemäß | 41.400 mPas | 156 |
| Vergleichsbeispiel 3 | nicht erfindungsgemäß | > 200.000 mPas | Nicht prüfbar |
| Vergleichsbeispiel 4 | nicht erfindungsgemäß | 11.600 mPas | 148 |
| Vergleichsbeispiel 5 | nicht erfindungsgemäß | > 300.000 mPas | Nicht prüfbar |
| Vergleichsbeispiel 6 | nicht erfindungsgemäß | 35.400 mPas | 133 |
| Vergleichsbeispiel 7 | nicht erfindungsgemäß | 9.900 mPas | 171 |
| Vergleichsbeispiel 8 | nicht erfindungsgemäß | 160.000 mPas | Nicht prüfbar |
| Beispiel 1 | erfindungsgemäß | 8.200 mPas | 171 |

## Patentansprüche

1. Zubereitungen, **dadurch gekennzeichnet, dass** diese
A) 15 bis 50 Gew.-% isocyanatgruppenhaltiges Isocyanurat
B) 84,99 bis 49,99 Gew.-% n- oder iso- Alkylmonobenzoate und
C) einen 2,4-TDI Restgehalt im Bereich von 0,01 bis 0,099 Gew.-% enthalten und eine Viskosität im Bereich von 5.000 -18.000 mPas/23°C aufweisen, mit der Maßgabe, dass
i) das isocyanatgruppenhaltige Isocyanurat ausschließlich durch Trimerisation von 2,4-Diisocyanatotoluol erzeugt wird und
ii) die Summe aller Gewichtsprozente 100% ergibt.

2. Zubereitungen nach Anspruch 1, **dadurch gekennzeichnet, dass** dic n- oder iso Alkylmonobenzoate > 90 Gew.-% n- oder iso-Nonylbenzoat enthalten.

3. Zubereitungen nach Anspruch 1 oder 2, **dadurch gekennzeichnet, dass** sie 20 bis 35 Gew.-% isocyanatgruppenhaltiges Isocyanurat und 79,99 bis 64,99 Gew.-% n- oder iso-Alkylmonobenzoate, bevorzugt n- oder iso-Nonylbenzoate, enthalten.

4. Verwendung von Zubereitungen gemäß einem der Ansprüche 1 bis 3 als Haftvermittler für Beschichtungsmittel auf Basis von weichgemachtem Polyvinylchlorid.

5. Verwendung gemäß Anspruch 4, **dadurch gekennzeichnet dass** die Beschichtungsmittel zur Herstellung von Substraten eingesetzt werden.

6. Verwendung gemäß Anspruch 5, **dadurch gekennzeichnet, dass** die beschichteten Substrate als Planen, Billboards, Traglufthallen und anderen textilen Bauten, flexiblen Behältern, Zeltdächem, Markisen, Schutzbekleidungen, Förderbändern, Flockteppichen oder Schaumkunstleder eingesetzt werden.

7. Verwendung gemäß der Ansprüche 5 oder 6, **dadurch gekennzeichnet, dass** die Substrate ein Grundgerüst auf Basis von Textilien oder Geweben haben.

8. Verwendung gemäß Anspruch 7, **dadurch gekennzeichnet, dass** es sich bei den Geweben um textile Polyester- oder Polyamidgewebe handelt.

9. Verfahren zur Herstellung der Zubereitungen gemäß der Ansprüche 1 bis 3, **dadurch gekennzeichnet, dass** man die Trimerisation des ausschließlich einzusetzenden 2,4-TDI zur Komponente A) in Gegenwart der Weichmacherkomponente B) lösungsmittelfrei und in Anwesenheit wenigstens einer als Katalysator fungierenden Mannich-Base im Temperaturbereich von 40 bis 140°C durchführt und sobald der Gehalt an freiem 2,4-TDI in der Reaktionsmischung unter 0,1Gew.-% liegt, die Trimerisation unter vollständiger oder teilweiser Deaktivierung des Katalysators durch thermische Zersetzung des Katalysators oder durch Zugabe wenigstens eines Katalysatorengifts abgebrochen wird.

10. Verfahren nach Anspruch 9, **dadurch gekennzeichnet, dass** die als Katalysator einzusetzende Mannich-Base zu 0,01 bis 2,0 Gew.-% eingesetzt wird.

11. Verfahren gemäß der Ansprüche 9 bis 10, **dadurch gekennzeichnet, dass** als Katalysatorgift solche aus der Reihe der Protonensäuren, Säurechloride oder methylierenden Verbindungen, bevorzugt Dibutylphosphat oder Toluolsulfonsäuremethylester, eingesetzt werden

12. Beschichtungsmittel, bevorzugt auf Basis von Polyvinylchlorid, **dadurch gekennzeichnet, dass** eine Zubereitung gemäß der Ansprüche 1 bis 3 eingesetzt wird.

## Claims

1. Preparations, **characterized in that** these comprise
A) from 15 to 50% by weight of isocyanurate containing isocyanate groups
B) from 84.99 to 49.99% by weight of n- or isoalkyl monobenzoates and
C) a residual content of 2,4-TDI in the range from 0.01 to 0.099% by weight
and have a viscosity in the range from 5000 to 18 000 mPas/23°C, with the proviso that
i) the isocyanurate containing isocyanate groups is produced exclusively via trimerization of 2,4-diisocyanatotoluene and
ii) the total of all of the percentages by weight is 100%.

2. Preparations according to Claim 1, **characterized in that** the n- or isoalkyl monobenzoates comprise > 90% by weight of n- or isononyl benzoate.

3. Preparations according to Claim 1 or 2, **characterized in that** they comprise from 20 to 35% by weight of isocyanurate containing isocyanate groups and from 79.99 to 64.99% by weight of n- or isoalkyl monobenzoates, preferably n- or isononyl benzoates.

4. Use of preparations according to any of Claims 1 to 3 as adhesion promoters for coating compositions based on plasticized polyvinyl chloride.

5. Use according to Claim 4, **characterized in that** the coating compositions are used for the production of substrates.

6. Use according to Claim 5, **characterized in that** the coated substrates are used as tarpaulins, billboards, air-supported structures and other textile structures, flexible containers, polygonal roofs, awnings, protective apparel, conveyor belts, flock carpets or foamed synthetic leather.

7. Use according to Claim 5 or 6, **characterized in that** the substrates have an underlying structure based on textiles or on fabrics.

8. Use according to Claim 7, **characterized in that** the fabrics are textile polyester fabrics or textile polyamide fabrics .

9. Process for the production of the preparations according to Claims 1 to 3, **characterized in that** the trimerization of the 2,4-TDI which is to be used exclusively to give component A) is carried out in the temperature range from 40 to 140°C in the presence of plasticizer component B) without solvent and in the presence of at least one Mannich base functioning as catalyst, and as soon as the content of free 2,4-TDI in the reaction mixture is below 0.1% by weight the trimerization is terminated with complete or partial deactivation of the catalyst via thermal decomposition of the catalyst or via addition of at least one catalyst poison.

10. Process according to Claim 9, **characterized in that** the amount used of the Mannich base to be used as catalyst is from 0.01 to 2.0% by weight.

11. Process according to Claims 9 to 10, **characterized in that** the catalyst poison used comprises catalyst poisons from the group of the protic acids, acyl chlorides, or methylating compounds, preferably dibutyl phosphate or methyl toluenesulphonate.

12. Coating composition, preferably based on polyvinyl chlorine, **characterized in that** a preparation according to Claims 1 to 3 is used.

## Revendications

1. Préparations, **caractérisées en ce que** celles-ci contiennent :
A) 15 à 50 % en poids d'isocyanurate contenant des groupes isocyanate ;
B) 84,99 à 49,99 % en poids de monobenzoates de n- ou d'iso-alkyle ; et
C) une teneur résiduelle en 2,4-TDI dans la pilage allant de 0,01 à 0,099 % en poids,
et présentent une viscosité dans la plage allant de 5 000 à 18 000 mPas/23 °C, à condition que
i) l'isocyanurate contenant des groupes isocyanate soit formé exclusivement par trimérisation de 2,4-diisocyanatotoluène et
ii) la somme de tous les pourcentages en poids soit de 100 %.

2. Préparations selon la revendication 1, **caractérisées en ce que** les monobenzoates de n- ou d'iso-alkyle contiennent > 90 % en poids de benzoate de n- ou d'iso-nonyle.

3. Préparations selon la revendication 1 ou 2, **caractérisées en ce qu'**elles contiennent 20 à 35 % en poids d'isocyanurate contenant des groupes isocyanate et 79,99 à 64,99 % en poids de monobenzoates de n- ou d'iso-alkyle, de préférence de benzoates de n- ou d'iso-nonyle.

4. Utilisation de préparations selon l'une quelconque des revendications 1 à 3 en tant que promoteur d'adhésion pour agent de revêtement à base de polychlorure de vinyle plastifié.

5. Utilisation selon la revendication 4, **caractérisée en ce que** les agents de revêtement sont utilisés pour la fabrication de substrats.

6. Utilisation selon la revendication 5, **caractérisée en ce que** les substrats revêtus sont utilisés en tant que bâches, panneaux d'affichage, dômes gonflables et autres constructions textiles, contenants flexibles, toits en pavillon, marquises, revêtements protecteurs, bandes de transport, moquettes floquées ou similicuirs expansés.

7. Utilisation selon la revendication 5 ou 6, **caractérisée en ce que** les substrats ont un squelette de base à base de textiles ou de tissus.

8. Utilisation selon la revendication 7, **caractérisée en ce que** les tissus sont des tissus textiles en polyester ou polyamine.

9. Procédé de fabrication de préparations selon les revendications 1 à 3, **caractérisé en ce que** la trimérisation du 2,4-TDI à utiliser exclusivement pour le composant A) en présence du composant plastifiant B) est réalisée sans solvant et en présence d' au moins une base de Mannich servant de catalyseur dans la plage de température allant de 40 à 140 °C, et dès que la teneur en 2,4-TDI libre dans le mélange réactionnel est inférieure à 0,1 % en poids, la trimérisation est interrompue par désactivation totale ou partielle du catalyseur par décomposition thermique du catalyseur ou par ajout d'au moins un poison de catalyseur.

10. Procédé selon la revendication 9, **caractérisé en ce que** la base de Mannich à utiliser en tant que catalyseur est utilisée à hauteur de 0,01 à 2,0 % en poids.

11. Procédé selon les revendications 9 à 10, **caractérisé en ce que** des poisons de catalyseur de la série des acides protoniques, des chlorures d'acides ou des composés méthylants, de préférence le phosphate de dibutyle ou l'ester méthylique de l'acide toluènesulfonnique, sont utilisés en tant que poison de catalyseur.

12. Argent de revêtement, de préférence à base de polychlorure de vinyle, **caractérisé en ce qu'**une préparation selon les revendications 1 à 3 est utilisés.
